# EUROPEAN PATENT APPLICATION

(11) **EP 4 607 736 A1**
(43) Date of publication of application: **27.08.2025**
(21) Application number: 23884273.6
(22) Date of filing: 03.07.2023
(51) Int. Cl.: H02J 3/38, H02J 3/48, H02J 3/50, H02J 3/24

(54) **CONTROL METHOD, NEW ENERGY CONVERTER, AND GRID-CONNECTED POWER SYSTEM**

(30) Priority: 02.11.2022 CN 202211363404
(71) Applicant: Huawei Digital Power Technologies Co., Ltd., Shenzhen, Guangdong 518043 (CN)
(72) Inventor: QU, Zisen, Shenzhen, Guangdong 518043 (CN); ZHAO, Mingquan, Shenzhen, Guangdong 518043 (CN); WANG, Shuo, Shenzhen, Guangdong 518043 (CN); XIN, Kai, Shenzhen, Guangdong 518043 (CN); LIU, Yunfeng, Shenzhen, Guangdong 518043 (CN)
(74) Representative: Isarpatent
(86) International application number: PCT/CN2023/105525
(87) International publication number: WO 2024/093334

(57) **Abstract**

A grid-forming control method for a new energy converter is provided, and is applied to a new energy converter. The new energy converter includes a conversion circuit and a controller, where an input end of the conversion circuit is configured to connect to a direct current source, and an output end of the conversion circuit is configured to connect to an alternating current system. After obtaining an active power at the output end of the conversion circuit, the controller converts a phase of the active power, to provide an inertia support characteristic in active power and frequency closed-loop control. The controller quickly controls a voltage parameter at the output end of the conversion circuit based on an active power obtained by delaying the phase, so that a voltage at the output end of the conversion circuit can be quickly adjusted without affecting the inertia support characteristic of an inverter.

## Description

This application claims priority to Chinese Patent Application No. 202211363404.8, filed with the China National Intellectual Property Administration on November 2, 2022 and entitled "CONTROL METHOD, NEW ENERGY CONVERTER, AND GRID-CONNECTED POWER SYSTEM", which is incorporated herein by reference in its entirety.

### TECHNICAL FIELD

The present invention relates to the field of power electronics technologies, and in particular, to a control method, a new energy converter, and a grid-connected power system.

### BACKGROUND

In recent years, a continuously rising global temperature drives carbon peaking and carbon neutrality to become a core task for important countries around the world to deal with climate changes. To reduce carbon emissions, clean energy becomes a development trend in the future. The clean energy includes solar energy, wind energy, water energy, tidal energy, and the like. Generally, the clean energy cannot be directly used, but can be converted into electric energy for human use. For example, a photovoltaic power generation system converts solar energy into electric energy, a hydropower generation system converts water energy into electric energy, a wind power generation system converts wind energy into electric energy, and another conversion manner may be used.

In the conventional technology, the photovoltaic power generation system, the hydropower generation system, and another power generation system all have limiting factors such as intermittentness, fluctuation, and randomness. As a result, a power system cannot be stabilized around the clock. With a large-scale increase in an installed capacity of new energy, power electronic devices accordingly penetrate into phases such as power generation, transmission, distribution, consumption, and storage of the power system, resulting in low inertia, a low short-circuit ratio, and the like of a power grid system. This reduces stability of the power grid system.

### SUMMARY

To resolve the foregoing problem, embodiments of this application provide a control method, a new energy converter, and a grid-connected power system. The new energy converter adjusts an active power at an output end in real time via units such as an instruction adjustment unit, an inertia control unit, and a forward control unit, to implement active power support for a frequency and active power support for a phase. Specifically, after obtaining an active power at an output end of a conversion circuit, a controller adjusts a phase of the active power, and may provide frequency and phase support characteristics in active power and frequency closed-loop control in coordination with units such as a forward control unit. The controller performs adjustment through a control loop based on an active power obtained through the phase adjustment, to adjust a voltage parameter at an output end of a power electronic converter. In addition, after receiving a power instruction, the controller performs instruction adjustment on the power instruction, and subtracts, from a corresponding active power adjustment value, the active power obtained through the phase adjustment, to obtain a power difference. The controller may quickly control the voltage parameter at the output end of the conversion circuit directly based on the power difference, thereby improving an instruction response speed of the conversion circuit.

Therefore, the following technical solutions are used in embodiments of this application.

According to a first aspect, an embodiment of this application provides a grid-forming control method for a new energy converter, and is applied to a new energy converter. The new energy converter includes a conversion circuit and a controller, where an input end of the conversion circuit is configured to connect to a direct current source, and an output end of the conversion circuit is configured to connect to an alternating current system. The method includes: controlling, by the controller, the conversion circuit to output an active power, and delaying a phase of the active power when a voltage frequency of the alternating current system fluctuates; and controlling a voltage parameter at the output end of the conversion circuit based on an active power obtained by delaying the phase, for the conversion circuit to output an active power with inertia support. An output of a generator set and a load of a power system constantly change. As a result, it is difficult for the generator set to rotate at a constant speed. When there is an imbalance between an active power of the generator set and an active power of the load in the power system, a frequency of the power system fluctuates due to the power imbalance between the generator set and the load, causing the frequency to fluctuate.

In this implementation, after obtaining a feedback value of the active power at the output end of the conversion circuit, the controller adjusts a phase of the feedback value of the active power, to provide an inertia support characteristic in active power, frequency, and phase closed-loop control. The controller quickly controls the voltage parameter at the output end of the conversion circuit based on the active power obtained through the phase adjustment. Particularly, the voltage parameter at the output end of the conversion circuit can be quickly adjusted without affecting the inertia support characteristic of an inverter.

In an implementation, before the controlling a voltage parameter at the output end of the conversion circuit based on an active power obtained by delaying the phase, the method further includes: receiving a power instruction, where the power instruction is used to control the voltage parameter at the output end of the conversion circuit; and the controlling a voltage parameter at the output end of the conversion circuit based on an active power obtained by delaying the phase includes: subtracting, from an active power corresponding to the power instruction, the active power obtained by delaying the phase, to obtain a power difference; and controlling the voltage parameter at the output end of the conversion circuit based on the power difference.

In this implementation, after receiving the power instruction, the controller subtracts, from the active power corresponding to the power instruction, the active power obtained through the phase adjustment, to obtain the power difference, and then quickly controls the voltage parameter at the output end of the conversion circuit. In this way, a voltage at the output end of the conversion circuit may be quickly adjusted without affecting the inertia support characteristic of the inverter, thereby improving an instruction response speed of the controller.

In an implementation, after the receiving a power instruction, the method further includes: converting the active power corresponding to the power instruction into a given power, where when an output voltage at the output end of the conversion circuit is stable, a value of the given power is equal to the active power obtained by delaying the phase; and the subtracting, from an active power corresponding to the power instruction, the active power obtained by delaying the phase, to obtain a power difference includes: subtracting, from the given power, the active power obtained by delaying the phase, to obtain the power difference.

In this implementation, after receiving the power instruction, the controller converts the active power corresponding to the power instruction into the given power, so that the value of the given power is the same as the active power obtained through the phase adjustment when the output voltage at the output end of the conversion circuit is stable. In this case, the power difference is zero. When the output voltage at the output end of the conversion circuit is stable, the controller may not need to adjust the output voltage at the output end of the conversion circuit.

In an implementation, the voltage parameter includes a voltage frequency, and the controlling the voltage parameter at the output end of the conversion circuit based on the power difference includes: converting the power difference into the voltage frequency based on a relationship between a power and a frequency of a synchronous motor.

In this implementation, the controller obtains the voltage frequency through conversion based on the power difference, to adjust a frequency of the output voltage at the output end of the conversion circuit.

In an implementation, the voltage parameter further includes a voltage phase, and the controlling the voltage parameter at the output end of the conversion circuit based on the power difference includes: performing integration on a voltage angular velocity to obtain the voltage phase. The voltage frequency is determined based on the power difference, and the voltage angular velocity is determined based on the voltage frequency.

In this implementation, the controller performs integration on the voltage angular velocity to obtain the voltage phase, to adjust a phase of the output voltage at the output end of the conversion circuit.

In an implementation, the voltage parameter further includes a voltage amplitude, and the controlling the voltage parameter at the output end of the conversion circuit based on the power difference includes: controlling the voltage amplitude and the voltage phase based on a rated reactive power value, an actual reactive power value, the voltage angular velocity, the voltage phase, a rated amplitude value, and an actual amplitude value. A reactive power is determined based on an output voltage signal and an output current signal, the voltage frequency is determined based on the power difference, the voltage angular velocity is determined based on the voltage frequency, and the voltage phase is determined based on the voltage angular velocity.

In this implementation, the controller controls the voltage amplitude based on the reactive power, the voltage angular velocity, the voltage phase, the rated amplitude value, and the rated value of the reactive power, to adjust the phase of the output voltage at the output end of the conversion circuit.

In an implementation, the method further includes: generating a trigger signal based on the voltage parameter, where the trigger signal is used to trigger a power electronic device inside the conversion circuit to be turned on or off, to further adjust the voltage parameter at the output end of the conversion circuit.

According to a second aspect, an embodiment of this application provides a new energy converter, including a conversion circuit and a controller. The controller is configured to: control the conversion circuit to output an active power, and delay a phase of the active power when a voltage frequency of an alternating current system fluctuates; and control a voltage parameter at an output end of the conversion circuit based on an active power obtained by delaying the phase, for the conversion circuit to output an active power having a frequency and phase support function.

In an implementation, the controller is further configured to: receive a power instruction, where the power instruction is used to control the voltage parameter at the output end of the conversion circuit; subtract, from an active power corresponding to the power instruction, the active power obtained through the phase adjustment, to obtain a power difference; and control the voltage parameter at the output end of the conversion circuit based on the power difference. The new energy converter is a commonly used power electronic converter, for example, an inverter, a rectifier, a modular multi-level converter, or another converter, or a bidirectional converter.

In an implementation, the controller is further configured to: convert the active power corresponding to the power instruction into a given power, where when an output voltage at the output end of the conversion circuit is stable, a value of the given power is equal to the active power obtained by delaying the phase; and subtract, from the given power, the active power obtained by delaying the phase, to obtain the power difference.

In an implementation, the voltage parameter includes a voltage frequency, and the controller is specifically configured to convert the power difference into the voltage frequency based on a relationship between a power and a frequency of a synchronous motor.

In an implementation, the voltage parameter further includes a voltage phase, and the controller is specifically configured to perform integration on a voltage angular velocity to obtain the voltage phase. The voltage frequency is determined based on the power difference, and the voltage angular velocity is determined based on the voltage frequency.

In an implementation, the voltage amplitude is controlled based on a rated reactive power value, an actual reactive power value, the voltage angular velocity, the voltage phase, a rated amplitude value, and an actual amplitude value. A reactive power is determined based on an output voltage signal and an output current signal, the voltage frequency is determined based on the power difference, the voltage angular velocity is determined based on the voltage frequency, and the voltage phase is determined based on the voltage angular velocity.

In an implementation, the controller is further configured to generate a trigger signal based on the voltage parameter, where the trigger signal is used to trigger a power electronic device inside the conversion circuit to adjust the voltage parameter at the output end of the conversion circuit.

According to a third aspect, an embodiment of this application provides a grid-connected power system, including a new energy component, and at least one new energy converter that may be implemented in the second aspect. An input end of the new energy converter is connected to the new energy component, or is indirectly connected to the new energy component by using a direct current converter, or is connected to another energy storage apparatus, and an output end of the new energy converter is configured to connect to a power grid or a load. The converter is configured to: convert a direct current of the new energy component or a direct current output by the direct current converter into an alternating current of the power grid, or convert an alternating current of the power grid into a direct current.

According to a fourth aspect, an embodiment of this application provides a computer-readable storage medium. The computer-readable storage medium stores a computer program, and when the computer program is executed in a computer, the computer is enabled to perform embodiments that may be implemented in the first aspect.

According to a fifth aspect, an embodiment of this application provides a computer program product. The computer program product stores instructions, and when the instructions are executed by a computer, the computer is enabled to implement embodiments that may be implemented in the first aspect.

### BRIEF DESCRIPTION OF DRAWINGS

The following briefly describes the accompanying drawings required for describing embodiments or the prior art.
FIG. 1 is a diagram of an architecture of a grid-connected power system in the conventional technology;
FIG. 2(a) is a diagram of a process of executing an instruction response by a grid-forming control unit in the conventional technology;
FIG. 2(b) is a diagram of a process of executing frequency and phase support responses by a grid-forming control unit in the conventional technology;
FIG. 3 is a diagram of an architecture of a grid-forming control unit in the conventional technology;
FIG. 4 is a diagram of an architecture of a grid-forming control unit in the conventional technology;
FIG. 5 is a diagram of an architecture of a controller according to an embodiment of this application; and
FIG. 6 is a schematic flowchart of a control method according to an embodiment of this application.

### DESCRIPTION OF EMBODIMENTS

The following describes the technical solutions in embodiments of this application with reference to the accompanying drawings in embodiments of this application.

The term "and/or" in this specification describes an association relationship between associated objects and indicates that three relationships may exist. For example, A and/or B may indicate the following three cases: Only A exists, both A and B exist, and only B exists. The character "/" in this specification indicates an "or" relationship between the associated objects. For example, A/B indicates A or B.

In the specification and claims of this specification, the terms "first", "second", and the like are intended to distinguish between different objects, but do not indicate a particular order of the objects. For example, a first response message, a second response message, and the like are used to distinguish between different response messages, but do not indicate a particular order of the response messages.

In embodiments of this application, terms such as "example" or "for example" are used to represent giving an example, an illustration, or a description. Any embodiment or design scheme described by "example" or "for example" in embodiments of this application should not be explained as being more preferred or having more advantages than another embodiment or design scheme. To be precise, the terms such as "example" or "for example" are intended to present a related concept in a specific manner.

In the descriptions of embodiments of this application, unless otherwise specified, "a plurality of" means two or more. For example, a plurality of processing units are two or more processing units, and a plurality of elements are two or more elements.

When an external power supply system, for example, a photovoltaic power generation system, a hydropower generation system, a wind power generation system, or a backup power supply, is connected to a power grid system, an inverter generally needs to be connected in series to the power grid system. The inverter can adjust voltage parameters such as a voltage frequency, a voltage phase, and a voltage amplitude of the external power supply system, so that the voltage parameters of the external power supply system are the same as those of a national power supply system.

According to different control logic, existing inverters may be classified into grid-following control (grid-following control) inverters, grid-forming control (grid-forming control) inverters, and other types of inverters. The grid-following control inverter uses a phase-locked loop, to enable the voltage parameters of the external power supply system to be the same as those of the national power supply system. The grid-forming control inverter uses a power control method, to enable the voltage parameters of the external power supply system to be the same as those of the national power supply system.

When the grid-following control inverter connects the external power supply system to the national power system, the grid-following control inverter presents a characteristic of low inertia or no inertia. If a large-scale external power supply system is connected to the power grid system, characteristics such as inertia and system strength of the power grid system are reduced. However, the grid-forming control inverter does not reduce the characteristics such as the inertia and the system strength of the power grid system. Therefore, the grid-forming control inverter has more advantages than the grid-following control inverter.

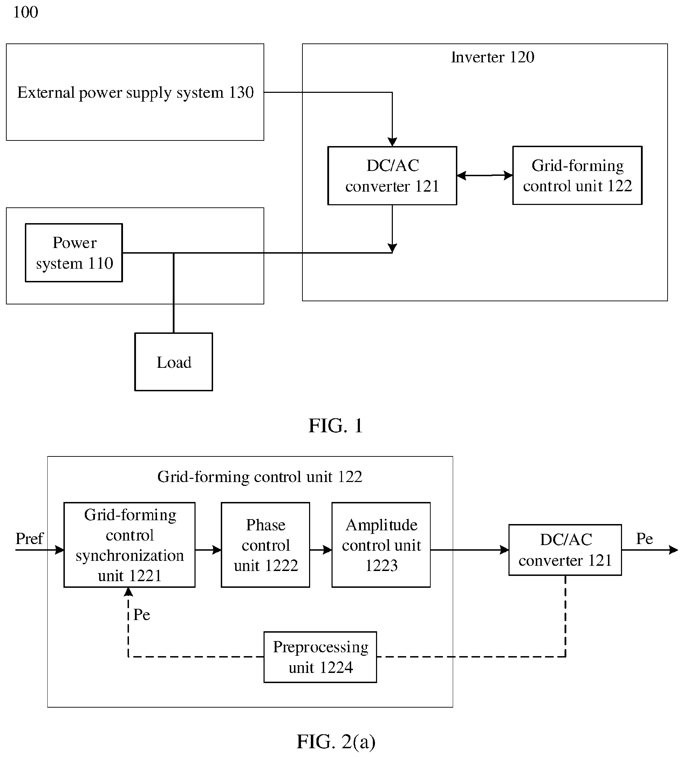

FIG. 1 is a diagram of an architecture of a grid-connected power system in the conventional technology. As shown in FIG. 1, a grid-connected power system 100 includes a power system 110, an inverter 120, and an external power supply system 130. The external power supply system 130 is connected to the power system 110 by using the inverter 120. In another embodiment, the grid-connected power system 100 may include other components such as a transformer, an inductor, a power connection wire, and the like. This is not limited in this application.

The inverter 120 includes a bidirectional direct current/alternating current (direct current/alternating current, DC/AC) conversion circuit 121 and a grid-forming control unit 122. An input end of the bidirectional DC/AC conversion circuit 121 is electrically connected to the external power supply system 130. An output end of the bidirectional DC/AC conversion circuit 121 is electrically connected to the power system 110. The bidirectional DC/AC conversion circuit 121 converts a direct current of the external power supply system 130 into an alternating current, and inputs the alternating current to the power system 110.

The grid-forming control unit 122 is coupled to the bidirectional DC/AC conversion circuit 121, and is configured to receive an output voltage signal and an output current signal of the output end of the bidirectional DC/AC conversion circuit 121, and an input voltage signal and an input current signal of the input end of the bidirectional DC/AC conversion circuit 121. The output voltage signal may be a direct current voltage of the bidirectional DC/AC conversion circuit 121. Alternatively, the output voltage signal may be an alternating current voltage of the bidirectional DC/AC conversion circuit 121.

After receiving the output voltage signal and the output current signal of the bidirectional DC/AC conversion circuit 121, the grid-forming control unit 122 adjusts a voltage parameter at the output end of the bidirectional DC/AC conversion circuit 121, so that the voltage parameter at the output end of the bidirectional DC/AC conversion circuit 121 is the same as a voltage parameter of the power system 110. The voltage parameter may be a voltage frequency, a voltage phase, and a voltage amplitude.

FIG. 2(a) is a diagram of a process of executing an instruction response by a grid-forming control unit in the conventional technology. As shown in FIG. 2(a), the grid-forming control unit 122 is divided into a grid-forming control synchronization unit 1221, a phase control unit 1222, an amplitude control unit 1223, and a preprocessing unit 1224 based on functions performed.

The preprocessing unit 1224 receives the output voltage signal and the output current signal of the output end of the bidirectional DC/AC conversion circuit 121, and calculates an active power Pe. The grid-forming control synchronization unit 1221 may receive an active power Pref corresponding to a power instruction sent from the outside and the active power Pe of the preprocessing unit 1224. By analogy with a nonlinear positive relationship between a power and a frequency of a synchronous motor, the grid-forming control synchronization unit 1221 may determine a relationship between a power and a frequency. The grid-forming control synchronization unit 1221 calculates a voltage angular velocity ωsyn based on the received active power. A relationship between an angular velocity ω and a frequency f is ω=2πf. After receiving the voltage angular velocity ωsyn, the phase control unit 1222 performs integration on the voltage angular velocity ωsyn to obtain a voltage phase θsyn. The amplitude control unit 1223 receives parameters such as the voltage angular velocity ωsyn and the voltage phase θsyn, may calculate a voltage amplitude Ve, and send a control instruction to the bidirectional DC/AC conversion circuit 121, so that the bidirectional DC/AC conversion circuit 121 adjusts a voltage parameter of an output voltage at the output end.

As shown in FIG. 2(a), when the grid-forming control unit 122 executes an instruction response, the grid-forming control synchronization unit 1221 receives the externally sent power instruction. When the grid-forming control unit 122 receives a change in the active power Pref corresponding to the power instruction, the active power Pe at the output end of the bidirectional DC/AC conversion circuit 121 changes accordingly. The grid-forming control synchronization unit 1221 quickly converts the active power Pref into the voltage angular velocity ωsyn, so that an output power of the bidirectional DC/AC conversion circuit 121 can quickly respond to the power instruction.

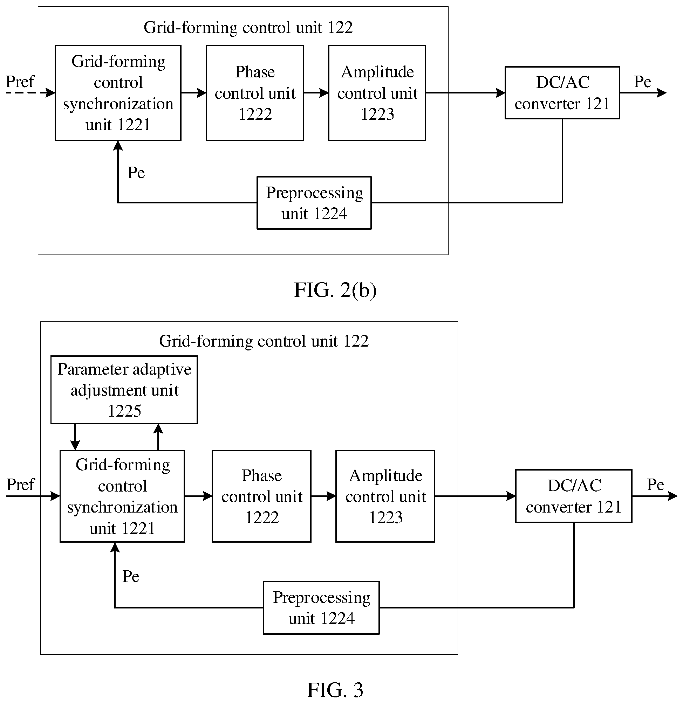

As shown in FIG. 2(b), when the grid-forming control unit 122 executes frequency and phase support responses, the grid-forming control synchronization unit 1221 receives the active power Pe of the preprocessing unit 1224. When the grid-forming control unit 122 receives a change in the active power Pe of the preprocessing unit 1224, the grid-forming control synchronization unit 1221 slowly converts the active power Pe into the voltage angular velocity ωsyn, to prevent the inverter 120 from quickly adjusting the voltage parameter of the output voltage at the output end, and reduce frequency and phase support characteristics of the power system 110.

When the grid-forming control unit 122 executes two types of different control logic: the instruction response and the frequency and phase support responses, conversion speeds of the grid-forming control synchronization unit 1221 are opposite. If the conversion speed of the grid-forming control synchronization unit 1221 is high, the frequency and phase support characteristics of the inverter 100 may be weakened. If the conversion speed of the grid-forming control synchronization unit 1221 is slow, a speed of responding to the power instruction by the inverter 120 is reduced. Therefore, the existing grid-forming control unit 122 cannot resolve a problem of a contradiction between a power instruction response and frequency and phase support responses.

To resolve the problem that the grid-forming control unit 122 cannot resolve the contradiction between the instruction response and the frequency and phase support responses, two solutions are provided in the conventional technology. The two solutions are respectively as follows:

As shown in FIG. 3, the grid-forming control unit 122 may further include a parameter adaptive adjustment unit 1225. The parameter adaptive adjustment unit 1225 is coupled to the grid-forming control synchronization unit 1221. When the external power supply system 130 is connected to the power system 110, a voltage parameter of the external power supply system 130 is different from the voltage parameter of the power system 110, and the inverter 100 needs to be controlled to adjust the voltage parameter of the external power supply system 130.

After receiving the externally sent power instruction, the grid-forming control synchronization unit 1221 executes the power instruction response. When receiving the active power Pref corresponding to the power instruction, the grid-forming control unit 122 sends the active power Pref to the parameter adaptive adjustment unit 1225. The parameter adaptive adjustment unit 1225 generates a control parameter based on the active power Pref, information about a control environment in which the grid-forming control unit 122 is located, and another state variable. The grid-forming control synchronization unit 1221 may autonomously adjust, based on the control parameter, a speed of converting the active power Pref into the voltage angular velocity ωsyn. This may improve a speed of responding to the power instruction by the inverter 100, but reduce the frequency and phase support characteristics of the inverter 100.

When the grid-forming control unit 122 executes the frequency and phase support responses, the preprocessing unit 1224 sends the active power Pe to the grid-forming control unit 122. When the voltage parameter of the power system 110 changes, the grid-forming control unit 122 receives a change in the active power Pe. The grid-forming control unit 122 sends the active power Pe to the parameter adaptive adjustment unit 1225. The parameter adaptive adjustment unit 1225 generates a control parameter based on the active power Pe, information about a control environment in which the grid-forming control unit 122 is located, and another state variable. The grid-forming control synchronization unit 1221 may reversely and autonomously adjust, based on the control parameter, a speed of converting an angular velocity ω of the active power into the voltage angular velocity ωsyn. This may improve the frequency and phase support characteristics of the inverter 100, but reduce a speed of responding to the power instruction by the inverter 100.

In the conventional technology, the grid-forming control unit 122 introduces a technical path based on parameter adaptation, and adjusts a conversion speed of the grid-forming control synchronization unit 1221 by using a control parameter generated by the parameter adaptive adjustment unit 1225 based on the active power and an environment factor. The control parameter is in a dynamic change state, so that properties such as an active power conversion speed, the frequency and phase support characteristics, and the like of the inverter 100 change with the control parameter, causing a reduction in stability of the inverter 100. In addition, the control parameter generated by the parameter adaptive adjustment unit 1225 may enable the grid-forming control synchronization unit 1221 to autonomously adjust the conversion speed within a specific value range. However, in some working conditions, when the control parameter exceeds the specific value range, it is difficult for the grid-forming control synchronization unit 1221 to autonomously adjust the conversion speed.

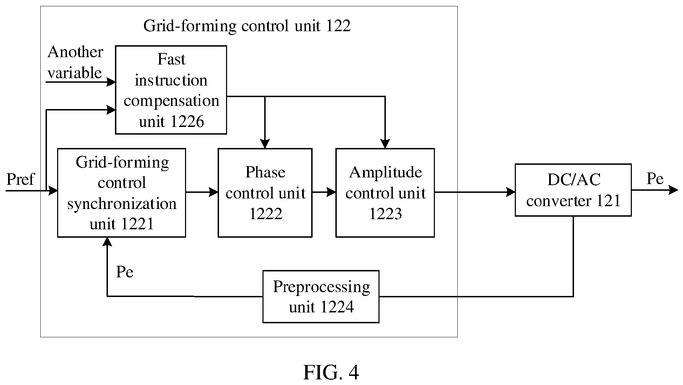

As shown in FIG. 4, the grid-forming control unit 122 may further include a fast instruction compensation unit 1226. An output end of the fast instruction compensation unit 1226 is coupled to both the phase control unit 1222 and the amplitude control unit 1223. When the external power supply system 130 is connected to the power system 110, a voltage parameter of the external power supply system 130 is different from the voltage parameter of the power system 110, and the inverter 100 needs to be controlled to adjust the voltage parameter of the external power supply system 130.

After receiving the power instruction, the inverter 120 sends the active power Pref corresponding to the power instruction to the grid-forming control synchronization unit 1221 and the fast instruction compensation unit 1226. After receiving the externally sent power instruction, the grid-forming control synchronization unit 1221 executes the power instruction response. The fast instruction compensation unit 1226 generates a parameter like a frequency compensation amount or a phase compensation amount based on a variation of the instruction power corresponding to the power instruction and another variable. The grid-forming control synchronization unit 1221 converts the active power into the voltage angular velocity ωsyn, and then inputs the voltage angular velocity ωsyn to the phase control unit 1222. The phase control unit 1222 may perform phase compensation based on the phase compensation amount of the fast instruction compensation unit 1226, or the amplitude control unit 1223 may perform frequency compensation based on the frequency compensation amount of the fast instruction compensation unit 1226, so that a speed of responding to the power instruction by the inverter 100 may be improved. However, the frequency and phase support characteristics of the inverter 100 may be weakened.

To resolve a defect of an existing inverter, embodiments of this application provide a new energy converter, a control method, and a grid-connected power system.

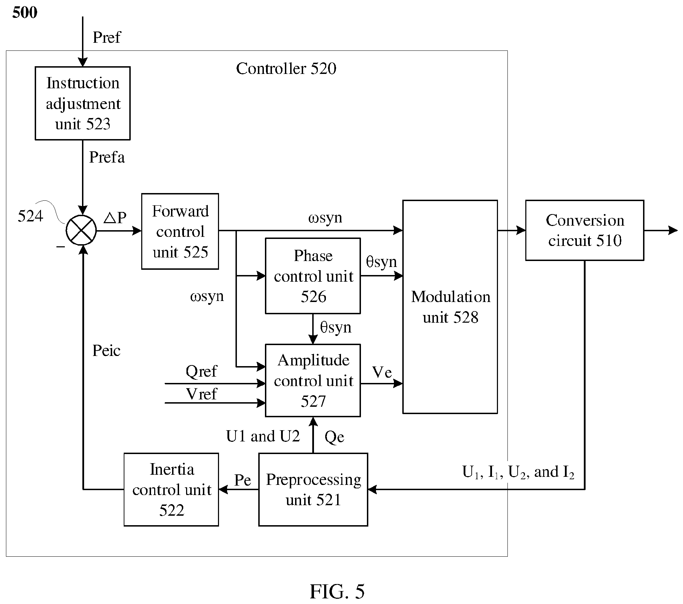

FIG. 5 is a diagram of a structure of a new energy converter according to an embodiment of this application. As shown in FIG. 5, a new energy converter 500 includes a conversion circuit 510 and a controller 520. In this application, one end of the new energy converter 500 is electrically connected to an external power supply system, and the other end of the converter 500 is electrically connected to a power system.

In an embodiment, the new energy converter 500 may be an inverter, a rectifier, a modular multi-level converter, or another converter. In another embodiment, the new energy converter 500 may be a bidirectional converter.

In an embodiment, the external power supply system may be a backup power supply, a photovoltaic power generation system, a hydropower generation system, a wind power generation system, or another power supply system.

In an embodiment, the power system may be a power grid system, a household power grid, an enterprise power grid, or another power system.

The conversion circuit 510 includes a bidirectional DC/AC conversion circuit, configured to: convert an alternating current into a direct current, or convert a direct current into an alternating current. In an embodiment, a voltage of the external power supply system is a direct current, a voltage of the power system is an alternating current, and the conversion circuit 510 converts the direct current of the external power supply system into an alternating current of a specified voltage value. In another embodiment, the conversion circuit 510 may be another type of conversion circuit. This is not limited in this application.

The controller 520 may be a digital signal processing (digital signal processing, DSP) unit, a field programmable gate array (field programmable gate array, FPGA), a microcontroller unit (microcontroller unit, MCU), or another device having a computing and control function. In this application, after receiving an output voltage signal U₁ and an output current signal I₁ of an output end of the conversion circuit 510 and an input voltage signal U₂ and an input current signal I₂ of an input end of the conversion circuit 510, the controller 520 adjusts a voltage parameter of an output voltage at the output end of the conversion circuit 510. After receiving a power instruction that is externally input, the controller 520 adjusts the voltage parameter of the output voltage at the output end of the conversion circuit 510 based on an active power corresponding to the power instruction, the output voltage signal U₁ and the output current signal I₁ of the output end of the conversion circuit 510, and the input voltage signal U₂ and the input current signal I₂ of the input end of the conversion circuit 510. The voltage parameter may be a voltage frequency fsyn, a voltage phase θsyn, and a voltage amplitude Ve.

In this embodiment of this application, the controller 520 may be divided into a preprocessing unit 521, an inertia control unit 522, an instruction adjustment unit 523, a subtractor 524, a forward control unit 525, a phase control unit 526, an amplitude control unit 527, and a modulation unit 528 based on functions performed. The preprocessing unit 521, the inertia control unit 522, the instruction adjustment unit 523, the subtractor 524, the forward control unit 525, the phase control unit 526, the amplitude control unit 527, and the modulation unit 528 may all be implemented by using software, or may be implemented by using hardware, or may be implemented by using a combination of software and hardware.

The preprocessing unit 521 is configured to receive the output voltage signal U₁ and the output current signal I₁ of the output end of the conversion circuit 510. The preprocessing unit 521 is further configured to: calculate an active power Pe and a reactive power Qe based on the output voltage signal U₁ and the output current signal I₁, input the active power Pe to the inertia control unit 522, and input the reactive power Qe, the input voltage signal U₂, and the output voltage signal U₁ to the amplitude control unit 527. The active power Pe and the reactive power Qe may be an average power or an instantaneous power. For the average power, the active power Pe is alternating current energy that is actually generated or consumed in a unit time, and is an average power in a periodicity. The reactive power Qe means that in an alternating current circuit with reactance, an electric field or a magnetic field absorbs energy from a power supply in a part of a periodicity, and releases energy in another part of the periodicity. The average power is zero in the entire periodicity, but the energy is continuously exchanged between the power supply and a reactance element (capacitor or inductor). A maximum exchange rate is the reactive power Qe. For the instantaneous power, a value of the instantaneous power is equal to a product of an instantaneous voltage and an instantaneous current. The instantaneous power of the alternating current is not a constant value. An average value of the instantaneous power in a periodicity is referred to as the active power. Therefore, the active power is also referred to as the average power.

In this embodiment of this application, the conversion circuit 510 further includes a sampling module. The sampling module samples the output voltage and an output current at the output end to obtain the output voltage and the output current. The sampling module converts the output voltage and the output current into digital signals to obtain the output voltage signal U₁ and the output current signal I₁, and inputs the output voltage signal U₁ and the output current signal I₁ to the controller 520. The sampling module samples an input voltage and an input current at the input end to obtain the input voltage and the input current. The sampling module converts the input voltage and the input current into digital signals to obtain the input voltage signal U₂ and the input current signal I₂, and inputs the input voltage signal U₂ and the input current signal I₂ to the controller 520.

The conversion circuit 510 may be a bidirectional conversion circuit. In an embodiment, the input end of the conversion circuit 510 is an external power supply system, and the output end of the conversion circuit 510 is a power system. The output voltage is an alternating current voltage, the output current is an alternating current, the input voltage is a direct current voltage, and the input current is a direct current. In an embodiment, the input end of the conversion circuit 510 is a power system, and the output end of the conversion circuit 510 is an external power supply system. The output voltage is a direct current voltage, the output current is a direct current, the input voltage is an alternating current voltage, and the input current is an alternating current.

The inertia control unit 522 may be a combination of one or more of functions such as a proportional function, an integral equation, a first-order low-pass filter, a multi-order low-pass filter, and the like. When a voltage frequency or a voltage phase of the power system fluctuates, the power system may cause an output power at the output end of the conversion circuit 510 to fluctuate. The inertia control unit 522 may convert a phase of the active power Pe to obtain an active power Peic obtained by delaying the phase. In addition, when the inertia control unit 522 converts the phase of the active power Pe, an amplitude of the active power Pe changes. In this application, the inertia control unit 522 converts the amplitude and the phase of the active power Pe, to delay the phase of the active power Pe and change the amplitude of the active power Pe. The inertia control unit 522 provides frequency and phase support characteristics for the new energy converter 500 in active power and frequency closed-loop control.

In an embodiment, inertia control of the inertia control unit 522 may be equivalent to a first-order low-pass filter of a swing equation. After the active power Pe is input to the first-order low-pass filter, the first-order low-pass filter may convert the amplitude and the phase of the active power Pe based on stability parameter 1/K_{D} conversion, to delay the phase of the active power Pe and change the amplitude of the active power Pe.

The instruction adjustment unit 523 may be a combination of one or more of functions such as a proportional function, an integral equation, a rotor motion equation, a first-order low-pass filter, a multi-order low-pass filter, and the like. The instruction adjustment unit 523 is configured to: process an active power Pref corresponding to an input power instruction, and convert the active power Pref corresponding to the power instruction into a given power Prefa. When the output voltage at the output end of the conversion circuit 510 is stable, that is, a control system is in a stable state, the given power Prefa output by the instruction adjustment unit 523 is the same as the active power Peic that is obtained by delaying the phase and that is output by the inertia control unit 522.

In an embodiment, the instruction adjustment unit 523 is a proportional function. The instruction adjustment unit 523 divides the active power Pref corresponding to the power instruction by a specified proportional value to obtain the given power Prefa.

In an embodiment, the instruction adjustment unit 523 is a first-order low-pass filter. The instruction adjustment unit 523 performs filtering processing on the active power Pref corresponding to the power instruction, and converts the active power Pref corresponding to the power instruction into the given power Prefa.

The subtractor 524 is configured to: receive the given power Prefa output by the instruction adjustment unit 523 and the active power Peic that is obtained by delaying the phase and that is output by the inertia control unit, and subtract, from the given power Prefa, the active power Peic obtained by delaying the phase, to obtain a power difference △P.

The forward control unit 525 may be a combination of one or more of functions such as a proportional function, a differential equation, a low-pass filter, a high-pass filter, a lead/lag correction function, and the like. By analogy with a nonlinear positive relationship between a power and a frequency of a synchronous motor, the forward control unit 525 may determine a relationship between a power and a frequency. After receiving the power difference △P, the forward control unit 525 quickly converts the power difference △P into a voltage angular velocity ωsyn based on the relationship between the power and the frequency, and outputs the voltage angular velocity ωsyn to the phase control unit 526, the amplitude control unit 527, and the modulation unit 528.

In an embodiment, the forward control unit 525 is a combination of a proportional function, a differential equation, and a low-pass filter. The forward control unit 525 divides the power difference △P by a specified proportional value, and performs differential and filtering processing to obtain the voltage angular velocity ωsyn corresponding to the power difference △P.

The phase control unit 526 may be an integrator or a combination of an integrator and another device. After receiving the voltage angular velocity ωsyn, the phase control unit 526 performs integration on the voltage angular velocity ωsyn to obtain a voltage phase θsyn, and outputs the voltage phase θsyn to the amplitude control unit 527 and the modulation unit 528.

The amplitude control unit 527 may be a combination of one or more of functions such as a proportional function, an integral equation, a proportional integral equation, and the like. After receiving parameters such as the reactive power Qe, the input voltage signal U₂, and the output voltage signal U₁ that are from the preprocessing unit 521, the voltage angular velocity ωsyn from the forward control unit 525, the voltage phase θsyn from the phase control unit 526, an actual amplitude value, an externally input rated amplitude value Vref, an externally input rated reactive power value Qref, the amplitude control unit 527 may control a voltage amplitude Ve, and output the voltage amplitude Ve to the modulation unit 528.

The modulation unit 528 receives the voltage angular velocity ωsyn, the voltage phase θsyn, and the voltage amplitude Ve, and generates a trigger signal based on the voltage angular velocity ωsyn, the voltage phase θsyn, and the voltage amplitude Ve. A relationship between an angular velocity ω and a frequency f is ω=2πf, and a voltage frequency fsyn may be obtained based on the voltage angular velocity ωsyn. After receiving the trigger signal, the conversion circuit 510 may control a power electronic device inside the conversion circuit 510 to operate, to adjust a frequency, a phase, and an amplitude of the output voltage at the output end of the conversion circuit 510.

In this embodiment of this application, after receiving the output voltage signal U₁ and the output current signal I₁ of the conversion circuit 510, the controller 520 inputs the output voltage signal U₁ and the output current signal I₁ to the preprocessing unit 521, so that the preprocessing unit 521 calculates the active power Pe and the reactive power Qe. The inertia control unit 522 converts the amplitude and the phase of the active power Pe to obtain the active power Peic obtained by delaying the phase, so that the frequency and phase support characteristics are provided for the new energy converter 500 in the active power and frequency closed-loop control.

When a voltage parameter of the power system does not change, the active power Pe calculated by the preprocessing unit 521 is 0. The control system does not need to provide the frequency and phase support characteristics for the power system. When the voltage parameter of the power system changes, the controller 520 implements a function of frequency and phase support responses. The inertia control unit 522 delays the phase of the active power Pe, and changes the amplitude of the active power Pe, so that the frequency and phase support characteristics are provided for the new energy converter 500 in the active power and frequency closed-loop control.

The controller 520 further receives the power instruction. After receiving the power instruction, the instruction adjustment unit 523 converts the active power Pref corresponding to the power instruction into the given power Prefa. The power difference △P input by the subtractor 524 to the forward control unit 525 is a difference between the given power Prefa and the active power Peic obtained through the phase adjustment.

The forward control unit 525 quickly converts the power difference △P into a voltage angular velocity ω. After receiving the voltage angular velocity ω, the phase control unit 526 performs integration on the voltage angular velocity ω to obtain a voltage phase θ. After receiving parameters such as the reactive power Qe, the input voltage signal U₂, the output voltage signal U₁, the voltage angular velocity ω, the voltage phase θ, the actual amplitude value, the externally input rated amplitude value Vref, the externally input rated reactive power value Qref, and the like, the amplitude control unit 527 may control the voltage amplitude Ve. The modulation unit 528 generates a trigger signal based on the received voltage angular velocity ω, the voltage phase θ, and the voltage amplitude Ve.

After receiving the trigger signal, the conversion circuit 510 may control a power electronic device inside the conversion circuit 510 to operate, so that the power electronic device inside the conversion circuit 510 adjusts a frequency, a phase, and an amplitude of the output voltage at the output end of the conversion circuit 510.

In this embodiment, after receiving the externally sent power instruction, the controller 520 executes a power instruction response. The instruction adjustment unit 523 and the forward control unit 525 may quickly adjust a synchronous angular velocity of a voltage, so that the controller 520 may quickly adjust trigger information. After receiving the trigger information, the conversion circuit 510 may quickly adjust the voltage parameter of the output voltage at the output end of the conversion circuit 510, thereby improving an instruction response speed of the conversion circuit 510.

In an embodiment, the controller 520 does not receive the power instruction, or the active power Pref corresponding to the power instruction is equal to 0. The voltage of the power system is unstable, and the active power Pe calculated by the preprocessing unit 521 is not equal to 0. The power difference △P input by the subtractor 524 to the forward control unit 525 is equal to -Peic. In this case, the controller 520 provides the frequency and phase support characteristics for the power system, and adjusts the voltage parameter of the output voltage at the output end of the conversion circuit 510, so that the voltage parameter of the output voltage at the output end of the conversion circuit 510 changes with the voltage parameter of the power system.

In an embodiment, the controller 520 does not receive the power instruction, or the active power Pref corresponding to the power instruction is equal to 0. The voltage of the power system is stable, and the active power Pe calculated by the preprocessing unit 521 is equal to 0. The power difference △P input by the subtractor 524 to the forward control unit 525 is equal to 0. In this case, the controller 520 adjusts the voltage parameter of the output voltage at the output end of the conversion circuit 510 to tend to a stable state.

In an embodiment, the controller 520 receives the power instruction, and the active power Pref corresponding to the power instruction is not equal to 0. The power difference △P input by the subtractor 524 to the forward control unit 525 is equal to Prefa-Peic. In this case, the controller 520 provides the frequency and phase support characteristics for the power system based on the active power of the preprocessing unit 521. In addition, the controller 520 quickly adjusts the voltage parameter of the output voltage at the output end of the conversion circuit 510 based on the active power corresponding to the power instruction and the active power of the preprocessing unit 521, so that the voltage parameter of the output voltage at the output end of the conversion circuit 510 changes with the voltage parameter of the power system.

In this embodiment of this application, the instruction adjustment unit 523 and the forward control unit 525 act on a short time scale, so that an instruction response speed can be increased. The inertia control unit 522 acts on a long time scale, and can provide the frequency and phase support characteristics.

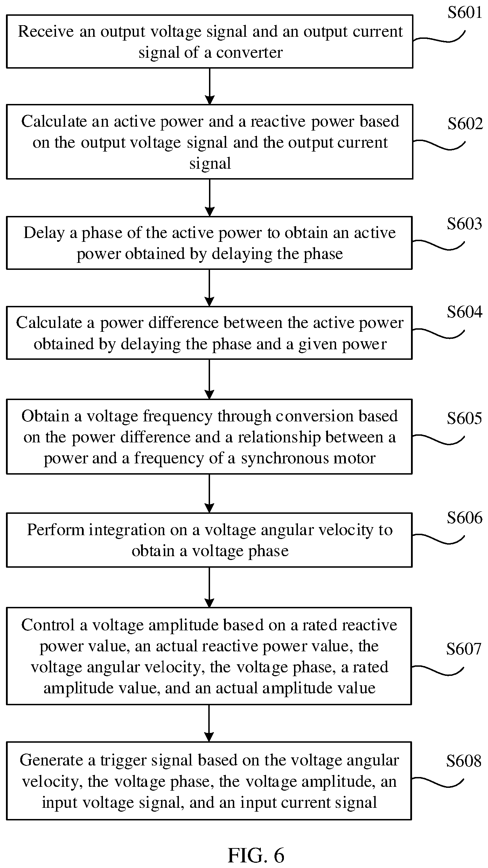

FIG. 6 is a schematic flowchart of a control method according to an embodiment of this application. As shown in FIG. 6, the control method is performed by a controller 520, and a specific process is as follows:
Step S601: The controller 520 receives an output voltage signal and an output current signal of a conversion circuit 510.

Specifically, one end of the conversion circuit 510 is electrically connected to an external power supply system, and the other end of the conversion circuit 510 is electrically connected to a power system. The conversion circuit 510 converts an alternating current into a direct current, or converts a direct current into an alternating current. A sampling module inside the conversion circuit 510 samples an output voltage and an output current at an output end to obtain the output voltage and the output current. The sampling module samples an input voltage and an input current at an input end to obtain the input voltage and the input current.

In an embodiment, the sampling module converts the output voltage, the output current, the input voltage, and the input current into digital signals to obtain an output voltage signal U₁, an output current signal I₁, an input voltage signal U₂, and an input current signal I₂, and inputs the output voltage signal U₁, the output current signal I₁, the input voltage signal U₂, and the input current signal I₂ to the controller 520.

Step S602: The controller 520 calculates an active power and a reactive power based on the output voltage signal and the output current signal.

Specifically, after receiving the output voltage signal U₁ and the output current signal I₁ of the conversion circuit 510, the controller 520 calculates an active power Pe and a reactive power Qe based on the output voltage signal U₁ and the output current signal I₁.

In an embodiment, the controller 520 includes a preprocessing unit 521. The preprocessing unit 521 is configured to receive the output voltage signal U₁, the output current signal I₁, the input voltage signal U₂, and the input current signal I₂ of the conversion circuit 510. The preprocessing unit 521 is further configured to: calculate the active power Pe and the reactive power Qe based on the output voltage signal U₁ and the output current signal I₁, input the active power Pe to an inertia control unit 522, and input the reactive power Qe, the input voltage signal U₂, and the output voltage signal U₁ to an amplitude control unit 527.

Step S603: The controller 520 delays a phase of the active power to obtain an active power obtained by delaying the phase.

Specifically, the controller 520 converts an amplitude and a phase of the active power Pe to obtain an active power Peic obtained by delaying the phase. The controller 520 processes the amplitude and the phase of the active power Pe, to delay the phase of the active power Pe and change the amplitude of the active power Pe.

In an embodiment, the controller 520 includes the inertia control unit 522. When a voltage frequency or a voltage phase of the power system fluctuates, the power system may cause an output power at the output end of the conversion circuit 510 to fluctuate. The inertia control unit 522 may convert the amplitude and the phase of the active power Pe to obtain the active power Peic obtained by delaying the phase. The inertia control unit 522 provides frequency and phase support characteristics for a new energy converter 500 in active power and frequency closed-loop control.

Step S604: The controller 520 calculates a power difference between the active power obtained by delaying the phase and a given power.

Specifically, if the controller 520 receives a power instruction, the controller 520 may subtract, from an active power corresponding to the power instruction, the active power obtained by delaying the phase, to calculate the power difference. If the controller 520 does not receive a power instruction, the controller 520 may use the active power obtained by delaying the phase as the power difference.

In an embodiment, the controller 520 includes an instruction adjustment unit 523. The instruction adjustment unit 523 is configured to: process an active power Pref corresponding to an input power instruction, and convert the active power Pref corresponding to the power instruction into a given power Prefa. When the output voltage at the output end of the conversion circuit 510 is stable, that is, a control system is in a stable state, the given power Prefa output by the instruction adjustment unit 523 is the same as the active power Peic that is obtained by delaying the phase and that is output by the inertia control unit 522.

In an embodiment, the controller 520 does not receive the power instruction, or the active power Pref corresponding to the power instruction is equal to 0. The voltage of the power system is unstable, and the active power Pe calculated by the preprocessing unit 521 is not equal to 0. The power difference △P input by a subtractor 524 to a forward control unit 525 is equal to -Peic.

In an embodiment, the controller 520 does not receive the power instruction, or the active power Pref corresponding to the power instruction is equal to 0. The voltage of the power system is stable, and the active power Pe calculated by the preprocessing unit 521 is equal to 0. The power difference △P input by a subtractor 524 to a forward control unit 525 is equal to 0.

In an embodiment, the controller 520 receives the power instruction, and the active power Pref corresponding to the power instruction is not equal to 0. The power difference △P input by a subtractor 524 to a forward control unit 525 is equal to Prefa-Peic.

Step S605: The controller 520 obtains a voltage frequency through conversion based on the power difference and a relationship between a power and a frequency of a synchronous motor.

Specifically, by analogy with a nonlinear positive relationship between a power and a frequency of a synchronous motor, the controller 520 may determine a relationship between a power and a frequency. After receiving the power difference △P, the forward control unit 525 converts the power difference △P into the voltage frequency based on the relationship between the power and the frequency.

In an embodiment, the controller 520 includes the forward control unit 525. After receiving the power difference △P, the forward control unit 525 quickly converts the power difference △P into a voltage angular velocity ωsyn based on the relationship between the power and the frequency of the synchronous motor, and outputs the voltage angular velocity ωsyn to a phase control unit 526, the amplitude control unit 527, and a modulation unit 528. A relationship between an angular velocity ω and a frequency f is ω=2πf, and a voltage frequency fsyn may be obtained based on the voltage angular velocity ωsyn.

Step S606: The controller 520 performs integration on the voltage angular velocity to obtain a voltage phase.

In an embodiment, the controller 520 includes the phase control unit 526. After receiving the voltage angular velocity ωsyn, the phase control unit 526 performs integration on the voltage angular velocity ωsyn to obtain a voltage phase θsyn, and outputs the voltage phase θsyn to the amplitude control unit 527 and the modulation unit 528.

Step S607: The controller 520 controls the voltage amplitude based on a rated reactive power value, an actual reactive power value, the voltage angular velocity, the voltage phase, a rated amplitude value, and an actual amplitude value.

In an embodiment, the controller 520 includes the amplitude control unit 527. After receiving parameters such as the reactive power Qe, the input voltage signal U₂, and the output voltage signal U₁ that are from the preprocessing unit 521, the voltage angular velocity ωsyn from the forward control unit 525, the voltage phase θsyn from the phase control unit 526, the actual amplitude value, an externally input rated amplitude value Vref, an externally input rated reactive power value Qref, the amplitude control unit 527 may control a voltage amplitude Ve, and output the voltage amplitude Ve to the modulation unit 528.

Step S608: The controller 520 generates a trigger signal based on the voltage angular velocity, the voltage phase, and the voltage amplitude. The trigger signal triggers adjustment of a voltage parameter of the output voltage at the output end of the conversion circuit 510.

In an embodiment, the controller 520 includes the modulation unit 528. The modulation unit 528 receives the voltage angular velocity ωsyn, the voltage phase θsyn, and the voltage amplitude Ve, and generates the trigger signal based on the voltage angular velocity ωsyn, the voltage phase θsyn, and the voltage amplitude Ve. The relationship between the angular velocity ω and the frequency f is ω=2πf, and the voltage frequency fsyn may be obtained based on the voltage angular velocity ωsyn. After receiving the trigger signal, the conversion circuit 510 may control a power electronic device inside the conversion circuit 510 to operate, to adjust a frequency, a phase, and an amplitude of the output voltage at the output end of the conversion circuit 510.

In this embodiment of this application, after obtaining the active power at the output end of the conversion circuit, the controller converts the amplitude and the phase of the active power to obtain the active power obtained by delaying the phase, to provide the frequency and phase support characteristics in active power and frequency closed-loop control. The controller controls the voltage parameter at the output end of the conversion circuit based on the active power obtained by delaying the phase, to adjust the voltage parameter at the output end of the conversion circuit. After receiving the power instruction, the controller subtracts, from the active power corresponding to the power instruction, the active power obtained by delaying the phase, to obtain the power difference. The controller may quickly control the voltage parameter at the output end of the conversion circuit directly based on the power difference, thereby improving an instruction response speed of the conversion circuit.

An embodiment of this application further provides a grid-connected power system. The grid-connected power system includes a first power system, a second power system, and at least one new energy converter. The first power system may be a backup power supply, a photovoltaic power generation system, a hydropower generation system, a wind power generation system, or another power supply system. The second power system may be a power grid system, a household power grid, an enterprise power grid, or another power system. The new energy converter may execute the technical solutions shown in FIG. 5 and FIG. 6 and the corresponding technical solutions mentioned above, so that the grid-connected power system has technical effects of the foregoing protection technical solutions.

An embodiment of this application further provides a computer program product including instructions. The computer program product may be a software or program product that includes instructions and that can run on a computing device or be stored in any usable medium. When the computer program product is run on at least one computing device, the at least one computing device is enabled to perform a control method.

Embodiments of this application further provide a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions instruct a computing device to perform a control method.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the protection scope of the technical solutions of embodiments of the present invention.

## Claims

1. A grid-forming control method for a new energy converter, applied to a new energy converter, wherein the new energy converter comprises a conversion circuit and a controller, an input end of the conversion circuit is configured to connect to a direct current source, and an output end of the conversion circuit is configured to connect to an alternating current system; and the method comprises:
controlling, by the controller, the conversion circuit to output an active power, and delaying a phase of the active power when a voltage frequency of the alternating current system fluctuates; and
controlling, by the controller, a voltage parameter at the output end of the conversion circuit based on an active power obtained by delaying the phase, for the conversion circuit to output an active power with inertia support.

2. The method according to claim 1, wherein before the controlling, by the controller, a voltage parameter at the output end of the conversion circuit based on an active power obtained by delaying the phase, the method further comprises:
receiving a power instruction, wherein the power instruction is used to control the voltage parameter at the output end of the conversion circuit; and
the controlling a voltage parameter at the output end of the conversion circuit based on an active power obtained by delaying the phase comprises:
subtracting, from an active power corresponding to the power instruction, the active power obtained by delaying the phase, to obtain a power difference; and
controlling the voltage parameter at the output end of the conversion circuit based on the power difference.

3. The method according to claim 2, wherein after the receiving a power instruction, the method further comprises:
converting the active power corresponding to the power instruction into a given power, wherein when an output voltage at the output end of the conversion circuit is stable, a value of the given power is equal to the active power obtained by delaying the phase; and
the subtracting, from an active power corresponding to the power instruction, the active power obtained by delaying the phase, to obtain a power difference comprises:
subtracting, from the given power, the active power obtained by delaying the phase, to obtain the power difference.

4. The method according to claim 2 or 3, wherein the voltage parameter comprises a voltage frequency, and
the controlling the voltage parameter at the output end of the conversion circuit based on the power difference comprises:
converting the power difference into the voltage frequency based on a relationship between a power and a frequency of a synchronous motor.

5. The method according to any one of claims 1 to 4, wherein the voltage parameter further comprises a voltage phase; and
the controlling the voltage parameter at the output end of the conversion circuit based on the power difference comprises:
performing integration on a voltage angular velocity to obtain the voltage phase, wherein the voltage frequency is determined based on the power difference, and the voltage angular velocity is determined based on the voltage frequency.

6. The method according to any one of claims 1 to 5, wherein the voltage parameter further comprises a voltage amplitude; and
the controlling the voltage parameter at the output end of the conversion circuit based on the power difference comprises:
controlling the voltage amplitude based on a rated reactive power value, a reactive power, the voltage angular velocity, the voltage phase, a rated amplitude value, and an actual amplitude value, wherein the reactive power is determined based on the output voltage signal and the output current signal, the voltage frequency is determined based on the power difference, the voltage angular velocity is determined based on the voltage frequency, and the voltage phase is determined based on the voltage angular velocity.

7. The method according to any one of claims 1 to 6, wherein the method further comprises:
generating a trigger signal based on the voltage parameter, wherein the trigger signal is used to trigger a power electronic device inside the conversion circuit to adjust the voltage parameter at the output end of the conversion circuit.

8. A new energy converter, comprising a conversion circuit and a controller, wherein
the controller is configured to: control the conversion circuit to output an active power, and delay a phase of the active power when a voltage frequency of the alternating current system fluctuates; and
control a voltage parameter at an output end of the conversion circuit based on an active power obtained by delaying the phase, for the conversion circuit to output an active power with inertia support.

9. The new energy converter according to claim 8, wherein the controller is further configured to: receive a power instruction, wherein the power instruction is used to control the voltage parameter at the output end of the conversion circuit;
subtract, from an active power corresponding to the power instruction, the active power obtained by delaying the phase, to obtain a power difference; and
control the voltage parameter at the output end of the conversion circuit based on the power difference.

10. The new energy converter according to claim 9, wherein the controller is further configured to: convert the active power corresponding to the power instruction into a given power, wherein when an output voltage at the output end of the conversion circuit is stable, a value of the given power is equal to the active power obtained by delaying the phase; and
subtract, from the given power, the active power obtained by delaying the phase, to obtain the power difference.

11. The new energy converter according to claim 9 or 10, wherein the voltage parameter comprises a voltage frequency; and
the controller is specifically configured to convert the power difference into the voltage frequency based on a relationship between a power and a frequency of a synchronous motor.

12. The new energy converter according to any one of claims 8 to 11, wherein the voltage parameter further comprises a voltage phase; and
the controller is specifically configured to perform integration on a voltage angular velocity to obtain the voltage phase, wherein the voltage frequency is determined based on the power difference, and the voltage angular velocity is determined based on the voltage frequency.

13. The new energy converter according to any one of claims 8 to 12, wherein the voltage parameter further comprises a voltage amplitude; and
the controller is specifically configured to control the voltage amplitude based on a rated reactive power value, an actual reactive power value, the voltage angular velocity, the voltage phase, a rated amplitude value, and an actual amplitude value, wherein the reactive power is determined based on the output voltage signal and the output current signal, the voltage frequency is determined based on the power difference, the voltage angular velocity is determined based on the voltage frequency, and the voltage phase is determined based on the voltage angular velocity.

14. The new energy converter according to any one of claims 9 to 13, wherein the controller is further configured to generate a trigger signal based on the voltage parameter, wherein the trigger signal is used to trigger a power electronic device inside the conversion circuit to adjust the voltage parameter at the output end of the conversion circuit.

15. A grid-connected power system, comprising:
a new energy component, and
at least one new energy converter according to any one of claims 8 to 14, wherein an input end of the new energy converter is connected to the new energy component, an output end of the new energy converter is configured to connect to a power grid, and the converter is configured to: convert a direct current of the new energy component into an alternating current of the power grid, or convert an alternating current of the power grid into a direct current of the new energy component.
